## Europäisches Patentamt
## European Patent Office
## Office européen des brevets

(11) Publication number: **0 152 532**
**A1**

(19)

(12) **EUROPEAN PATENT APPLICATION**

(21) Application number: **84112447.2**

(22) Date of filing: **16.10.84**

(51) Int. Cl.⁴: **F 16 B 19/10**

(30) Priority: **23.02.84 US 582970**

(43) Date of publication of application: **28.08.85** Bulletin 85/35

(84) Designated Contracting States: **BE DE FR GB IT NL SE**

(71) Applicant: **Monogram Industries, Inc., c/o Nortek, Inc. 815 Reservoir Avenue, Cranston Rhode Island 02910 (US)**

(72) Inventor: **Pratt, John D., 6153 Sard Street, Rancho Cucamonga California 91701 (US)**

(74) Representative: **Patentanwälte Kohler - Schwindling - Späth, Hohentwielstrasse 41, D-7000 Stuttgart 1 (DE)**

(54) **Method for installing blind fasteners.**

(57) A method for installing blind fastener (10) for securing workpieces (12, 16) is provided having as principle components a stem member (24), a drive-nut (28), and a deformable annular means (26). The stem member (24) has an externally-threaded-portion (32) on the accessible-side thereof, and may have a stemhead (36) on the nonaccessible side thereof. The drive-nut (28) to be screwed onto the externally-threaded-portion (32) of the stem member (24). The deformable annular means (26) has as principle parts a head which is larger in diameter than the diameter of the boreholes (20, 22) of the workpieces (12, 16), and an intermediate-part adjacent the head which may have an outside diameter with slightly smaller or slightly larger than the diameter of the boreholes (20, 22), and a deformable tail-part (70 C) adjacent the intermediate-part and abutting the stemhead (36) for securing the workpieces (12, 16) when the fastener is set. The outer-portion of the stem member (24) contains a turning means (34) for rotating the stem member (24) relative to the drive-nut (28). Either the stem member (24) or the drivenut (28) are held fast while rotating the other until the fastener (10) is set and upon further rotation of the stem member (24) relative to the drive-nut (28) will cause the stem member (24) to break at the intersection between the drive-nut (28) and head. The break is located at a point on the stem member (24) which, when the fastener (10) is set, is substantially flush with the top outer surface (14) of the head. The fasteners (10) of this invention are particularly useful for the aircraft industry.

## METHOD FOR INSTALLING BLIND FASTENERS

### CROSS-REFERENCE TO RELATED APPLICATION

This application is directed to subject matter in co-pending application Serial No.          (Docket. No. 55-49), filed concurrently with this application and commonly assigned.

### BACKGROUND OF THE INVENTION

#### 1.  Field of the Invention

This invention relates to fasteners, especially blind fasteners, such as rivets which are frequently used in the aerospace industry and in particular in fastening or joining both non-aerodynamic and aerodynamic surfaces to structural members of an aircraft.

#### 2.  Description of the Prior Art

Blind fasteners are used in a variety of applications wherein access to the blind-side of surfaces being connected together is extremely limited or in some cases not possible.  Various particular applications impose unique, stringent requirements for which the fastener must be particularly adapted.

The application in which rivets or fasteners are used in the construction of aerodynamic designs, aircraft and the like, impose some of the most stringent requirements.  In particular, the fasteners must secure the members but resist losing their gripping power under the stresses and vibrations imposed upon them by the harsh environment in which they are used.  It is desirable that such fasteners produce a bulbed-like configuration on the blind-side, or non-accessible side, of the workpieces being joined.

U.S. Patent 3,253,495 discloses an assembly consisting of a pin or stem having a head on the blind-side thereof and pull-grooves on the accessible-side thereof, which fits into a sleeve the blind-side portion of which is deformable into a bulbed-like shaped head. To use, the blind bolt assembly is inserted into aligned boreholes of workpieces and a special tool having a plurality of chuck jaws grips the pull-grooves and pulls the pin outwardly away from the nonaccessible workpiece, thereby deforming the sleeve on the blind-side and forming a bulbed-like configuration. Unfortunately this fastener has several disadvantages. First the fastener requires a relatively expensive tool to effect its setting. Furthermore such a tool generally requires a relatively large amount of free-space on the accessible-side in order to grip the pin securely and complete the pulling operation required to set the fastener and form a tightly secured joint. In many situations in the aircraft industry, there is not available sufficient space on the accessible side to accomodate such special tools if such are required for the specific installation. Joints which are not tight must have the fastener drilled out and another joining operation attempted. Such corrective measures greatly increase the cost of fabrication.

Thus it is desirable to have a blind fastener which can be set without the need for specially designed tools, and in fact, which can be set with readily available, relatively inexpensive, hand or power tools.

Other disadvantages of the blind bolt of 3,253,495 are that it has a relatively low preload retention, the importance of which will be subsequently explained, and it has a tendency to lose its locking collar thereby reducing the gripping power of the bolt and increasing the deterioration of the joint through loss of the stem with subsequent loss of radial rigidity and continual exposure to vibration over longer periods of time.

Another blind rivet, disclosed in U.S. Patent No.

-2-

4,012,984, attempts to overcome the problem of losing the locking collar by providing a locking groove in the stem or pin of the rivet. This groove which is of a smaller diameter than the main body of the stem, is designed to hold the locking collar in the assembled rivet after it is set. The features of the locking collar and its corresponding groove described in U.S. 4,012,984 are useful in this invention and accordingly the relevant teachings of U.S. 4,012,984 is hereby incorporated herein by reference. As in U.S. 3,253,495, U.S. 4,012,984 also has the serious disadvantage of requiring a special tool for gripping the stem portion of the rivet in order to set the rivet.

Both U.S. 3,253,495 and 4,012,984 employ break grooves which enable the surplus portion of the stem, after the rivet is set, to be broken away from the rivet upon further pulling by the special gripping tool. Unfortunately a relatively rough surface is left on the accessible side of the rivet (as implied by FIG 5 of U.S. 4,012,984) which is aerodynamically undesirable in streamlined surfaces employed in the aircraft and aerospace industries. Furthermore rivets which are broken totally by tension on the stem with pull tools such as those employed in both U.S. 3,253,495 and 4,012,984 produce an undesirable shock load on the fastener when the stem breaks, due to pin recoil which results in a relatively low preload retention. This problem could, of course, be eliminated in the blind rivet of these types by cutting off the stem rather than rupturing in a stem-pull operation as currently employed. However it can be appreciated that the added task of cutting off the stem of the rivet is both expensive and time consuming, and in some cases, not possible because of insufficient working space on the accessible side of the rivet.

The blind fastener described in assignee's drawing

-3-

0152532

PLT-1040 consist of a flush nut which is internally threaded over its entire longitudinal length, a deformable sleeve, a core bolt and a drive-nut. After the fastener is set the drive-nut is unscrewed from the core bolt and the stem is cut off and milled flush. Although this fastener has the advantage of eliminating stem or pin recoil it suffers from the disadvantage of requiring an expensive final milling operation to produce a smooth aerodynamically-acceptable surface. Fasteners such as PLT-1040, are constructed from a high temperature A-286 alloy, and are used on honeycomb structures which can not withstand large amounts of compressive force or "clamp-up." After the fastener is set, the drive-nut is spun off (removed) from the stem member, the excess stem member clipped off, and the remaining stem member milled flush with the outer top surface of the flush-nut.

In order to prevent the removable portion of the stem member or "pin-tails" from inadvertently ending up in a piece of machinery, or laying about the aircraft structure so that it could possibly be sucked into the aircraft engine, thereby seriously damaging such machinery or engine, the aircraft industry laborously accounts for every pin-tail. Since the A-286 alloy and similar high strength, high temperature, alloys are nonmagnetic, a magnetic sweep of the aircraft structure and assembly area to recover the pin-tails is not possible because the drive-nut (which is magnetic) has been removed before the pin-tail is clipped. Thus it is desirable to have a fastener, which when the pin-tail is severed, has the drive-nut still attached to the pin-tail thereby allowing the pin-tail to be recovered by magnetic sweeping. There is another important advantage in having the drive-nut remain with its pin-tail, namely, since the pin-tail is relatively small (and the drive-nut relatively large) the pin-tail can become lodged in small openings from which it is very difficult to discover and

-4-

effect its recovery.

In pull-type fasteners such as U.S. Patents 3,253,495 and 4,012,984 the force exerted on the workpieces by the fastener just before the stem ruptures, referred to as "clamp-up," is significantly higher than the force exerted on the workpieces after the stem is ruptured at the break groove, referred to as "preload retention." This difference or loss of clamping force is attributed to stem recoil occurring at the time of stem rupture. The greater the stem recoil therefore the lower will be the force exerted on the workpieces by the fastener. Accordingly it is desirable to sever the stem at the break groove in such a manner that stem recoil is eliminated or greatly reduced thereby resulting in higher preload retention.

Further disadvantages of other prior art fasteners are set forth in my copending application, Serial No. 242,892 which is hereby incorporated herein by reference.

Accordingly, there is a need for a method of installing a blind fastener with commonly-available, relatively inexpensive, hand tools in which the surplus stem-portion can be severed without stem recoil and without expensive post-setting machining such as milling while at the same time producing an aerodynamically smooth surface at the severed stem and a joint having a relatively high preload retention.

SUMMARY OF THE INVENTION

It is an object of this invention to provide an improved method for installing blind fasteners for securing workpieces having aligned boreholes therethrough. It is a further object of this invention to provide a method for installing blind fasteners regardless of whether or not recesses are provided in the head of the annular means of the fastener.

It is still further an object of this invention to provide an improved method of installing a blind fastener without special tools whereby breakoff of the stem member of the fastener is accomplished by rotating either the stem member or drive-nut while holding the other of said stem member or drive-nut.

These and other objects are preferably accomplished utilizing a fastener having a stem member and a corresponding drive-nut. The stem member has an externally-threaded-portion on the accessible side thereof and may have a stem-head on the nonaccessible-side thereof. The diameter of the stem-head may be slightly smaller than the diameters of the aligned boreholes. The drive-nut has an internally-threaded-portion permitting the drive-nut to be screwed onto the externally-threaded-portion of the stem member.

The fastener further comprises a deformable annular means for securing workpieces together having a head which is larger in diameter than the diameter of the aligned boreholes, an intermediate part adjacent to the head which has an outside diameter generally slightly smaller (but may also be slightly larger) than the diameter of the boreholes, such that the combined longitudinal lengths of the head and the intermediate-part is, when the fastener is set, at least equal to the combined thicknesses of the workpieces, and a deformable tail-part adjacent the intermediate-part and abutting the stem-head and having an outside diameter smaller than the diameter of the boreholes for securing the workpieces when the fastener is set. The head is essentially free of a cavity or cavities which are operative for gripping with a tool which will prevent rotation of the annular means. A reduced recess may be provided in the head for inspection of seating torque.

The fastener also comprises turning means in the outer-portion of the stem member for rotating the stem member relative to the drive-nut.

The improved method includes the turning means and holding the drive-nut stationary while rotating the turning means relative to the drive-nut until the stem member breaks off at the junction between the drive-nut and the head.

The fastener may include a break groove in the stem member which has sufficient radial depth so that when the fastener is set, turning of the stem member relative to the drive-nut will cause the stem member to break at the break groove.  The break groove is located at a point  on the stem member which is, when the fastener is set, substantially  flush with the top outer surface of the head of the annular means.  However, breakoff will occur at the junction between the drive-nut and the head even if no break groove is provided in the stem member. Further, the stem member may be held fast with a suitable tool while the drive-nut is rotated which also results in stem breakoff.

In the method disclosed herein, it is not necessary that the drive-nut be removed from the stem member before the stem member is severed.  Thus the drive-nut advantageously remains with the severed portion of the stem member so that it can be recovered by a magnetic sweep of the area.  Thus, the stem member can be made of non-magnetic material and, since the broken off piece is attached to the drive-nut, it can be removed along with the drive-nut during such magnetic sweep.

The method disclosed herein enables use of inexpensive fasteners resulting in flush stem-break, and may be installed with lighter, less-expensive, standard hand-tools, have a higher clamp-up and preload retention, and may be installed where the free space on the accessible-side is relatively small.

## BRIEF DESCRIPTION OF THE DRAWING

FIG 1 is a partial cross-sectional view of a blind fastener which may be installed using the teachings of this invention; and

FIG 2 is a cross-sectional view of the fastener of FIG 1 after the fastener has been set using the teachins of this invention.


## DESCRIPTION OF THE PREFERRED EMBODIMENT

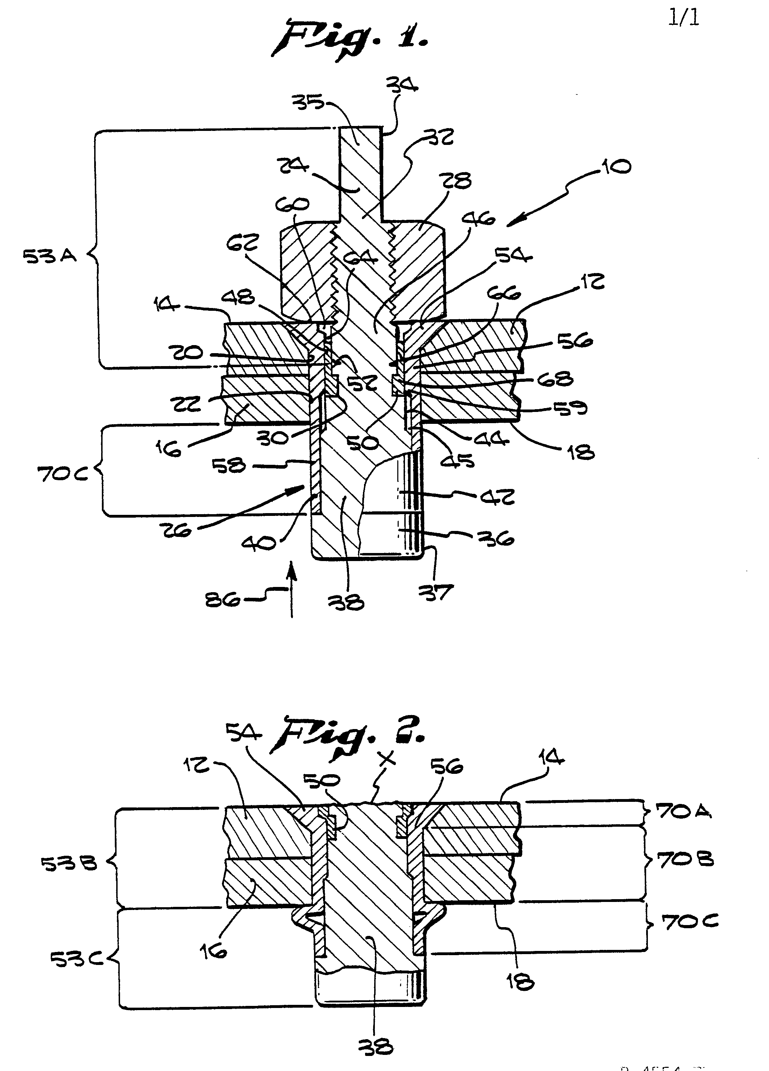

Referring to FIG 1, a fastener 10 is used to join outer and accessible workpiece 12 having accessible surface 14 and inner or nonaccessible workpiece 16 having nonaccessible surface 18. Fastener 10 is inserted through aligned boreholes 20 and 22 of the accessible and nonaccesible workpieces. The principal components of fastener 10 consists of stem member 24, annular means 26, drive nut 28, and annular locking ring 30.

Stem member 24 has an externally-threaded-section 32 and turning means 34 having wrenching flats 34. It can be seen that wrenching flats 34 may extend down to the upper surface of drive-nut 28 providing a substantial gripping area. The portion of stem member 24 surrounded by drive-nut 28 may be full threads to provide good gripping of the stem member 24 by nut 28. Outside diameter 37 of stem-head 36 is just slightly smaller than the diameter of the boreholes 20 and 22. Stem member 24 also contains cylindrical inner-section 38 having outside diameter 40 which is smaller than the outside diameter 37 of stem-head 36. Adjacent to inner-section 38 is cylindrical intermediate-section 42 having outside diameter 44 which is smaller than outside diameter 40 of inner-section 38. Chamfer 45 provides a transition between section 38 and 42. Adjacent to intermediate-section 42 is a cylindrical outer-section 46 having an outside diameter 48 which is smaller than outside diameter 44. Outer-section 46 contains annular locking ring groove 50 and break groove 52. The minimum diameter of break groove 52 is smaller than the inside diameter of threaded section 32 and the inside diameter of locking groove 50.

In general, the stem member 24 includes the following principal parts: removable-portion 53A which extends from the break groove 52 longitudinally outwards to the turning means 34; plug-portion 53B extending longitudinally, when the fastener is set as will be discussed, between the break groove 52 and inaccessible surface 18; and tail-portion 53C which includes the stem-head 54 and extends therefrom to, when the fastener is set, inaccessible surface 18.

Annular means 26 comprises a head 54 which is shown as annular but is not necessarily always so, annular shoulder-section 56 and annular thinner-section 58. The inside diameter of annular thinner-section 58 is just slightly larger than outside diameter 40, and the outside diameter of thinner-section 58 is just slightly smaller than the diameter of boreholes 20 and 22. The outside diameter of shoulder-section 56 is the same as the outside diameter of thinner-section 58. The inside diameter of shoulder-section 56 is just slightly larger than the outside diameter of intermediate-section 42. Chamfer 59 provides a transition between section 56 and 58, and is designed to match chamfer 45. Annular means 26 also contains an annular recess 60 which is adjacent to the outer surface 62 and the inside diameter of shoulder-section 56.

Annular locking ring 30 is formed from a single piece of deformable material having an annular thin-segment 66 which is adjacent to an annular thick-segment 68. Locking ring 30 is disposed in locking groove 50 thereby requiring the locking ring to move with stem member 24. Locking ring 30, before the fastener is set, abuts on its outside diameter shoulder-section 56 of annular means 26 and on its inside diameter outer-section 46 of stem member 24.

In general, annular means 26 includes the following principal parts: annular head 70A; intermediate-part 70B extending longitudinally from the head to, when the fastener is set, the nonaccessible surface 18; and tail-part 70C extending inwardly from the nonaccessible surface 18, when the fastener is set, to the nonaccessible extremity of the annular means 26. The method of installing the fastener 10 of Fig.1 will now be described. As particularly contemplated in the present invention, after insertion of fastener 10 into the openings 20, 22 in workpieces 12, 16, as heretofore described, with drive-nut 28 threaded onto and abutting against the outer surface 62 of head 54 as shown in Fig.1, a conventional wrench or the like (not shown) is used to hold drive-nut 28 fast while a similar conventional wrench or the like (also not shown) is used to grasp wrenching flats 34. Either drive-nut 28 may be held, while stem member 34 is rotated, or vice versa drive-nut 28 may be rotated while stem member 34 is held, or both drive-nut 28 and stem member 34 may be grasped and simultaneously rotated in opposite directions according to the invention. Stem member 24 is now rotated by turning means 34 until the deformable thinner-section 58 of annular means 26 deforms (Fig.2) and abuts against the surface 18. That is, by rotating member 24 while holding drive-nut 28 firmly against rotation, fastener 10 is set and tail-part 70C of annular means 26 is deformed against lower and nonaccessible surface 18 of inner workpiece 16, as shown in Fig.2. Chamfer 45 of inner-section 38 is abutted up against chamfer 59 of shoulder-section 56, and locking ring 30 is compressed in locking groove 50 and deformed and compressed into recess 60 under drive-nut 28. Further rotation of stem member 24 relative to drive-nut 28 while holding the drive-nut 28 firmly against rotation causes the stem to twist off and break relatively smoothly at break groove 52 (indicated at X in Fig.2) without stem recoil thereby producing a joint having relatively high preload retention.

Tail-part 70C of annular means 26 preferably is gradient hardened so that tail-part 70C will be deformed into a bulbed configuration which is pressed over a substantial part of nonaccessible surface 18 of inner workpiece 16 as shown in FIG 2.

A clear breakoff takes place at point X in Fig. 2 due to the torsion created at the junction between the outer surface 62 of annular means 26 and the adjacent abutting face of drive-nut 28. The torsion created is such that, once portion 58 reaches the final deformed position shown in Fig. 2, the stem member 24 will break off at point X regardless of whether or not break groove 52 is provided in the stem member 24. Thus, the break groove 52 in Fig. 1 may be eliminated.

Thus, when the drive-nut is screwed down tighter and tighter against the head of the annular means as the fastener is set, a tensile force is induced in the stem member at the point at which the stem member exits the annular means and this tensile force reduces the maximum torque that can be applied to the fastener and the gripping force of the fastener. This undesirable tensile force can be reduced by increasing the friction between the surfaces of the drive-nut and the head.

As discussed heretofore, it is preferred that the stem member be rotated and the drive-nut held stationary. However, it is to be understood that the stem-member could be held stationary and the drive-nut rotated, or both the stem member and the drive-nut rotated, as desired.

The stem member 24 severs at the break groove 52 smoothly and cleanly without stem member recoil (or at the intersection between surface 62 and drive-nut 28 if groove 52 is eliminated) thereby producing joints having relatively high preload retention. No special tools are required for gripping and pulling the removable portion of the stem member. Because a twisting motion is applied to the stem relative to the workpieces to sever the removable-portion of the stem member, rather than merely a tension pull, improved joints are produced. Further-

-11-

more, since standard tools may be used in the method of installing the fasteners in this invention, a minimum of free space is required on the accessible side of the outer workpiece, thereby enabling the fasteners of my copending application (Docket P 4555) to be used where other types of blind fasteners can not.

Although only the embodiment of the fastener 10 illustrated in Fig. 1 of my copending application (Docket P 4555) and described therein has been disclosed in accordance with the teachings of my invention herein, all of the embodiments of fasteners in my copending application (Docket P 4555) are installed in like manner utilizing the teachings of my invention herein. Thus, the teachings of the various embodiments of fasteners in my copending application (Docket P 4555) are fully incorporated herein as if described herein.

It can be seen that there is disclosed a method for installing blind fasteners which results in proper stem breakoff allowing easy retrieval of the broken off pieces without need for special tooling.

Many of the prior art blind fasteners have a Phillips type cavity in the head for gripping with a special tool as the outside-portion of the stem member or pin is screwed with the special tool. Frequently in the aerospace and aircraft industries, the heads of blind fasteners are generally very shallow in longitudinal depth. Because of this, Phillips-type or other type cavities tend to weaken the head. Furthermore, during the installation procedure the pulling tool or driving tool tends to "cam-out" the head thereby seriously weakening the strength of the fastener. In the method of my invention, however, the fastener is set without the necessity for restraining the annular means from rotating and hence there is no need to have a Phillips-type cavity or any type cavity whatsoever in the head. In the method of my invention the drive-nut translates rotary motion of the drive-nut into linear motion of the stem-head, thereby providing a number of advantages over the known method of installation of prior art blind fasteners. For example, installation may be accomplished with much lighter weight and low cost tooling. The shock loads common with pull-type fasteners experienced when the stem breaks are all eliminated in the method disclosed herein. Because of the rotation of the stem member relative to the drive nut, the removable portion of the pin is broken off relatively smoothly and cleanly thereby eliminating stem recoil as experienced with pull-type fasteners and producing a joint having a higher preload retention. Since, in the method disclosed herein, it is not necessary that the drive-nut be removed from the stem member before the stem member is severed, the drive-nut advantageously remains with the severed portion of the stem member so that it can be recovered by a magnetic sweep of the area. Thus, the stem member may be made from a nonmagnetic metal and the broken off pieces removed along with the drive-nuts to which they are threaded.

Many prior art fasteners, which comprise a cavity or cavities in the head for engaging with the nose of a gripping tool, can not be made of aluminum or other soft metals because the head will cam-out. The method of this invention permits use of fasteners which can have annular means made from an aluminum alloy or other soft metal since the method herein does not require fasteners which contain such cavities. Thus, the fasteners used in the method of this invention can have relatively thin heads as compared to fasteners which require cavities in the head to prevent rotation.

Although a single break groove has been optionally disclosed to assist in proper breakoff, other techniques may occur to an artisan and such are described as claimed in copending application Serial No. (Docket 56-52), commonly assigned. Also, friction at the point of engagement between the drive-nut and the head of the annular means may be decreased by making the contacting surfaces as smooth as possible. In this manner, tensile stress between the drive-nut and head are increased because of the increased jamming effect. Alternatively, the surface area of contact between the drive-nut and the head may be decreased (eg, making the parts of smaller diameter) so that they jam together tighter thus increasing tensile stress.

Some users of composite-type blind fasteners do not allow the use of pull-type fasteners because stem recoil damages the fibers of the installation thus making my invention particularly attractive to such users. The break off of the stem is generally at a point substantially flush with the surrounding surfaces of the accessible side of the installation. However, the term "substantially flush" as used herein means that the stem breaks off at a point that may be slightly above or below such surfaces.

The method disclosed herein permits use of fasteners which are relatively inexpensive, can be adopted to have a flush stem-break, can be installed with lighter, less-expensive, standard hand-tools, have a higher clamp-up and preload retention, and can be installed where the free space on the accessible-side is relatively small.

What is claimed is:

1. In a method for installing a blind fastener (10) in workpieces (12, 16) having aligned boreholes (20, 22) therethrough, and an access side and a blind side, said fastener (10) comprising a stem member (24) having an externally-threaded-portion (32), a drive-nut (28) having an internally-threaded-portion permitting said drive-nut (28) to be screwed onto the externally-threaded-portion (32) of said stem member (24), deformable annular means (26) for securing workpieces (12, 16) together having a head (70A) which is larger in diameter than the diameter of said aligned boreholes (20, 22), an intermediate-part (70 B) adjacent said head (70 A), the combined longitudinal lengths of said head (70 A) and said intermediate-part (70 B) being, when said fastener (10) is set, at least equal to the combined thicknesses of said workpieces (12, 16), and a deformable tail-part (70 C) adjacent said intermediate-part (70 B), and having an outside diameter smaller than the diameter of said boreholes (20, 22), for securing workpieces (12, 16) when said fastener (10) is set, said head (70 A) being essentially free of a cavity which is operative for gripping with a tool to prevent rotating of said annular means (26), turning means (34) in the outer portion of said stem member (24) for rotating said stem member (24) relative to said drive-nut (28), said turning means (34) and said drive-nut (28) being operable for effecting the setting of said fastener (10) by rotating said turning means (34) relative to said drive-nut (28) without the necessity for absolutely preventing any rotation of said annular means (26) relative to said drive-nut (28), the method including the steps of:

threading said drive-nut (28) onto the externally-threaded-portion (32) of said stem member (24) until said drive-nut (28) abuts against the head (70 A) of said annular means (26);

inserting said fastener (10) into the aligned boreholes (20,22) in said workpieces (12, 16) until the head (70 A) of said annular means (26) abuts against the non-blind side of said workpieces (12, 16); and

holding either said drive-nut (28) firmly while rotating said turning means (34) or holding said turning means (34) firmly while rotating said drive-nut (28) until said stem member (24) severs and said drive-nut (28) remains attached to the severed part of said stem member (24), said sever being located at a point (X) on said stem member (24) which is substantially flush with the top outer surface (14) of said head (70 A).

2. In the method of claim 1 including the step of providing an annular break groove (52) in said stem member (24) prior to rotating either said drive-nut (28) or said turning means (34) having sufficient radial depth so that said sever occurs at a poi: (X) substantially flush with the top outer surface (14) of said head (70 A).

3. In the method of claim 1 or 2, wherein the step of holding either said drive-nut (28) or said turning means (34) causes said deformable tail-part (70 C) to deform and abut agains the blind side of said work pieces (12, 16).

4. In the method of any of claims 1 to 3 including the step of making said drive-nut (28) of magnetic material and making said stem member (24) of non-magnetic material prior to installat in said workpieces (12, 16).

5. In the method of claim 4 including the step of magnetica removing the severed parts of said stem member (24) by attracting the drive-nuts (28) having said severed parts threaded thereto with a magnet.

6. In a method for installing a blind fastener (10) in aligned apertures in structural members of an aircraft wherein one side thereof is inaccessible or blind and the other side is accessible, the fastener (10) including a threaded screw provided with an enlarged screw head at one end and driving means at the other end, a sleeve encircling said screw between the screw head and the driving means, said sleeve having a deformable portion at one end abutting against said screw head, and an enlarged sleeve head at the other end, and a separate drive-nut (28) threaded on said screw below said driving means and abutting against said sleeve head, the improvement which comprises the steps of:

inserting said fastener (10) into said aligned openings with said nut (28) on the access side of said member;

holding either said nut (28) or said driving means firmly while rotating the other of either said nut (28) or said driving means; and

continuing said holding and said rotating until the deformable portion deforms and abuts against the surrounding surfaces of the blind side of said members and said screw breaks off at the intersection between said nut (28) and said sleeve head due to the torsion created at the intersection between said nut (28) and said sleeve head.

7.    In the method of claim 6 wherein the step of holding either said nut (28) or said driving means firmly while rotating the other includes the step of holding said nut (28) while rotating said driving means.

8.    In the method of claim 6 of 7, wherein the step of holding either said nut (28) or said driving means firmly while rotating the other includes the step of holding said driving means while rotating said nut (28).

- 4 -                                    0152532

9.   In the method of any of claims 6 to 8, wherein said drive-nut (28) is of magnetic material and including the step of subsequently applying a magnet to said nut (28) having the broken off portion of said screw thereby magnetically picking up said nut (28) and said attached brokenoff portion.

10.   In the method of any of claims 6 to 9, wherein said screw has a break groove (52) between said screw head and said driving means and the step of continuing said holding and said rotating includes the step of continuing said holding and said rotating until the break groove (52) reaches the intersection between said nut (28) and the head of said sleeve and said deformable portion deforms and said screw breaks off at said break groove (52).

*Fig. 1.*

*Fig. 2.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | CH-A- 429 389 (THE B.F. GOODRICH CO.) * Figure 1 * | 1,3,6 8 | F 16 B 19/10 |
| Y | FR-A- 724 508 (ETABLISSEMENTS LORE ET OLIVIER [AVIONS ET HYDRAVIONS] LEO) * Figure 4 * | 1,3,6 8 | |
| Y | FR-A-1 300 936 (ST. PAUL) * Figure 3 * | 1-3,6 8 | |
| Y | FR-A-2 438 761 (HUCK MANUFACTURING CO.) * Figure 1 * | 1,6 | |
| Y | GB-A- 553 124 (LINDSAY) * Figure 1 * | 1,3,6 8 | TECHNICAL FIELDS SEARCHED (Int. Cl.4) F 16 B 19/10 F 16 B 5/04 |
| Y | GB-A-1 604 503 (SPS TECHNOLOGIES) * Figure 4 * | 1,2,6 10 | |
| Y | US-A-2 915 934 (LA TORRE) * Figure 1 * | 1,3,6 | |
| Y | US-A-2 974 558 (HODELL) * Figure 2 * | 1,6,10 | |

--- -/-

The present search report has been drawn up for all claims

| Place of search BERLIN | Date of completion of the search 08-05-1985 | Examiner ZAPP E |
|---|---|---|

| | **DOCUMENTS CONSIDERED TO BE RELEVANT** | | Page 2 | |
|---|---|---|---|---|
| Category | Citation of document with indication, where appropriate, of relevant passages | Relevant to claim | CLASSIFICATION OF THE APPLICATION (Int. Cl.4) | |
| Y | US-A-4 089 247 (DAHL et al.)  * Figure 1 *  ----- | 1,2,6, 10 | | |
| | | | TECHNICAL FIELDS SEARCHED (Int. Cl.4) | |

The present search report has been drawn up for all claims

| Place of search | Date of completion of the search | Examiner |
|---|---|---|
| BERLIN | 08-05-1985 | ZAPP E |